# FASCICULE DE BREVET EUROPEEN

(11) **EP 0 617 077 B1**
(45) Date de publication et mention de la délivrance du brevet: **28.08.1996**
(21) Numéro de dépôt: 94400563.6
(22) Date de dépôt: 15.03.1994
(51) Int. Cl.: C08K 5/01, C08L 9/00, C08L 65/00

(54) **Composition comprenant un élastomère insaturé et un plastifiant de la famille des polyphénylméthanes**
Zusammensetzung bestehend aus einem ungesättigten Elastomer und einem Weichmacher aus der Familie der Polyphenylmethanen
Composition comprising an unsaturated elastomer and a plasticizer of the family of polyphenyl methanes

(30) Priorité: 23.03.1993 FR 9303304
(43) Date de publication de la demande: 28.09.1994
(73) Titulaire: ELF ATOCHEM S.A., F-92800 Puteaux (FR)
(72) Inventeur: Hert, Marius, F-27470 Serquigny (FR); Maindron, Guy, F-60940 Angicourt (FR); Commandeur, Raymond, F-38220 Vizille (FR)

(56) Documents cités:
- DE-B- 1 138 923
- CHEMICAL ABSTRACTS, vol. 82, no. 8, 24 Février 1975, Columbus, Ohio, US; abstract no. 44703d, ISHIKAWA H. ET AL. 'RUBBER COMPOSITIONS' page 76 ;colonne 1 ;

## Description

La présente invention est une composition comprenant un élastomère insaturé et un plastifiant de la famille des polyphénylméthanes.

Dans les FR 2635332, FR 2488269 et FR 2302312 on a décrit des plastifiants du polynorbornène.

Le polynorbornène est le polymère du bicyclo-[2.2.1] heptene ou de l'un de ses dérivés de substitution à chaîne courte. Les plastifiants cités sont soit des hydrocarbures liquides soit des huiles paraffiniques, aromatiques ou naphténiques soit des esters tels que des phtalates. La demande de brevet européen EP 384822 décrit des mélanges de polynorbornène et d'une polyoléfine cristalline avec un plastifiant qui peut être une huile paraffinique ou une huile naphténique. En réalité ces huiles minérales ne sont jamais complètement paraffinique ou complètement aromatique ni complètement naphténique mais contiennent toujours ces trois types de produits en proportion plus ou moins grande.

On a convenu de classer comme suit les huiles selon leur teneur en paraffine et leur viscosity-gravity-constant VGC déterminée selon Hill et Conts Inf. Eng. Chem. 20,64(1928)

| **Type d'huile** | **Teneur en hydrocarbure paraffinique (%)** | **VGC** |
|---|---|---|
| Paraffinique | > 56 | 0,79 à 0,85 |
| Naphténique | 48 à 56 | 0,85 à 0,955 |
| Aromatique | 15 à 32 | 0,955 à 1,050 |
| Hautement aromatique | 5 à 15 | >1,050 |

Ces huiles minérales sont aussi les plastifiants des élastomères SBR (abréviation de : styrène Butadiène Rubber).

Ces plastifiants ont pour but d'abaisser la température de transition vitreuse des élastomères à base de polynorbornène pour en faire des caoutchoucs, ou d'abaisser la dureté dans le cas des autres élastomères insaturés.

Les huiles minérales aromatiques contiennent des molécules polycycliques telles que le benzopyrène dont la teneur maximale tolérable a été limitée à 0,1 % dans certains pays en raison de leur toxicité (voir l'article de W. HAMANN et R. WOMMELSDORFF dans Kautschuk Gummi .K. 42 6/89).

A ces produits il faut ajouter aussi ceux générés par la dégradation des lourds contenus dans ces huiles lors de leur combustion.

La demanderesse a maintenant trouvé qu'on pouvait remplacer avantageusement ces huiles par des polyphénylméthanes de synthèse. Un avantage est qu'on en connaît la formule, on connaît donc bien les produits de dégradation. Un autre avantage est que la combustion de ces polyphénylméthanes au cours de la destruction des caoutchoucs ne génère pas de produits toxiques.

On a déjà utilisé certains polyphénylméthanes comme plastifiant. La demande japonaise JP 72-113907 déposée le 15 novembre 1970 et publiée le 5 septembre 1974 sous le n° J49093429 cite le 4,6 bis (alpha méthylbenzyl) m-xylène comme plastifiant d'un film constitué d'une résine acrylique, de nitrate de cellulose, de solvant cétonique, de butanol de toluène et d'oxyde de titane. Ce film recouvre une plaque d'acier et a une bonne résistance à la chaleur et à la lumière.

Le 4,5-bis(alphaméthylbenzyl)-o-xylène a aussi été utilisé.

Le brevet GB 841805 cite comme plastifiant du PVC le dibenzylbenzène, le dibenzyltoluène, dixylylxylène et le benzyldibenzyltoluène.

La demande de brevet hollandais 66-11650 décrit le dibenzyltoluène comme plastifiant du polylauryllactame.

La demande de brevet allemand DE 1228802 décrit le dibenzyltoluène comme stabilisant à la lumière du polyéthylène.

Aucun art antérieur ne concerne les élastomères insaturés.

La présente invention concerne une composition comprenant un élastomère insaturé et un plastifiant de la famille des polyphénylméthanes en quantité suffisante pour abaisser la température de transition vitreuse de l'élastomère pour en faire un caoutchouc.

L'élastomère insaturé est par exemple le polynorbornène, le SBR (abréviation de Styrène Butadiène Rubber), le BR (abréviation de polybutadiène), les copolymères séquencés SBS, le NR (abréviation de Natural Rubber), le polychloroprène (CR), l'EPDM (abréviation de Ethylène Propylène Diène monomère), le NBR (abréviation de Nitrile Butadiène Rubber), le polyisoprène (IR) ou le caoutchouc butyle (IIR).

L'élastomère peut être un mélange de deux ou plusieurs des produits cités ci-dessus ou l'un des produits en mélange avec des polyoléfines. L'élastomère peut être par exemple un mélange de polynorbornène et d'une polyoléfine comme décrit dans le brevet EP 384822.

Les polyphénylméthanes sont des produits de formule (1) 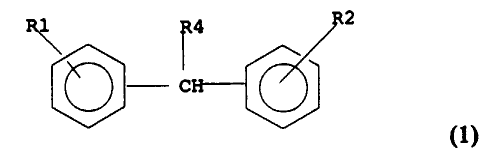 dans laquelle R1, R2 et R4 représentent un ou plusieurs des radicaux suivants : 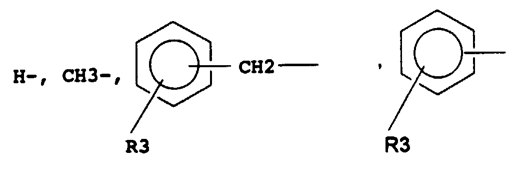 R3 désignant aussi un ou plusieurs radicaux :

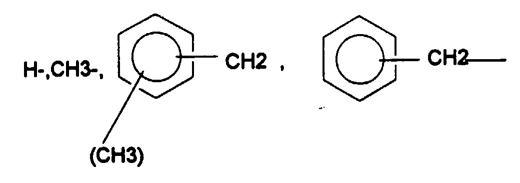

Le nombre total de noyaux aromatiques étant de preference au plus égal à 5.

Ces polyphénylméthanes peuvent être des mélanges d'isomères.

Ces polyphénylméthanes sont par exemple du dibenzyltoluène qui est un mélange d'isomères de formule (1) dans laquelle : R4 est l'hydrogène, R1 représente CH3- et éventuellement le benzyle (C6H5-CH2-)

R2 représente l'hydrogène ou le benzyle.

Le nombre total de noyaux aromatiques étant de 3.

Ce dibenzyltoluène peut aussi contenir un peu de bis-(tolyl)-phenylméthane c'est à dire le produit de formule (1) dans laquelle R4 est le phenyle et R1 et R2 le méthyle.

Les polyphénylméthanes peuvent être aussi du tribenzyltoluène qui est un mélange d'isomères de formule (1) dans laquelle :
R4 est l'hydrogène,
R1 représente le méthyle et éventuellement un ou deux radicaux 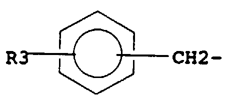
R2 représente l'hydrogène et éventuellement un ou deux radicaux 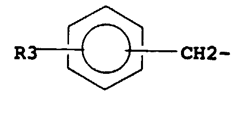
R3 étant l'hydrogène ou le benzyle.

Le nombre total de noyaux aromatiques étant 4.

Ce tribenzyltoluène peut aussi contenir un mélange d'isomères de formule (1) dans laquelle :

R4 est

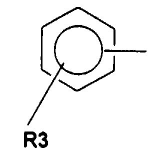

R1 et R2 représentent chacun un méthyle et éventuellement un benzyle.

R3 représente l'hydrogène ou un benzyle.

Le nombre total de noyaux aromatiques étant de 4.

Ces polyphénylméthanes peuvent être aussi un mélange de deux produits A et B (polybenzyltoluènes).

A est un mélange d'isomères de formule (1) dans laquelle :
R4 est l'hydrogène
R1 est un méthyle et éventuellement un ou plusieurs radicaux 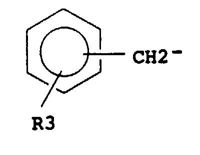
R2 est l'hydrogène et éventuellement un ou plusieurs radicaux 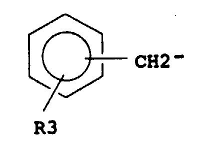
R3 est l'hydrogène ou le benzyle.

Le nombre total de noyaux aromatiques étant 4 ou 5.

B est un mélange d'isomères de formule (1) dans laquelle
R4 est 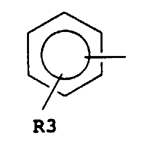
R1 et R2 sont chacun un méthyle et éventuellement un ou plusieurs 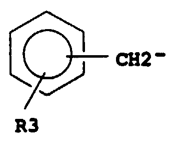
R3 étant l'hydrogène ou le benzyle.

Le nombre total de noyaux aromatiques étant 4 ou 5

Les 3 exemples précédents à savoir les dibenzyltoluène, tribenzyltoluènes et polybenzyltoluènes contiennent 85,7 % de carbone aromatique.

La quantité de polyphénylméthanes est fonction de la dureté recherchée (mesurée dans l'échelle Shore A).

A titre d'exemple dans un élastomère SBR type 1502, contenant 80 parties pcr (pcr = pour cent parties de Rubber/élastomère) de noir de carbone, une quantité de 40 pcr de dibenzyltoluène conduit à une dureté d'environ 60A après vulcanisation au soufre.

Le mélange s'effectue sur mélangeur interne selon les techniques connues.

On peut aussi mélanger ces polyphénylméthanes avec des huiles paraffiniques, dans la mesure où elles sont suffisamment pures, pour ne pas perdre le bénéfice de la présente invention.

La quantité de plastifiant et éventuellement d'huile paraffinique est de préférence inférieure à la limite au dessus de laquelle il y a exsudation.

Ces polyphénylméthanes peuvent être préparés par exemple selon les procédés décrits dans les brevets EP 136230 et EP 422986.

### EXEMPLES 1 à 4

On compare les propriétés d'un polynorbornène plastifié avec une huile naphténique ELF XT 8440, une huile paraffinique ESSO EZL 675 et un mélange de cette huile paraffinique avec le BT2.

Le BT2 est un mélange d'isomères du dibenzyltoluène selon la présente invention. C'est le produit défini plus haut et ayant 3 noyaux aromatiques. Il est exempt d'impuretés toxiques, irritantes ou nocives au titre des directives CEE 79/831 et 83/467. Le bis(tolyl)phenylméthane représente 5 % en poids de ce BT2.

L'huile naphténique est celle vendue sous le nom de ELF XT 8440. Ses caractéristiques ainsi que celles du BT2 sont les suivantes :

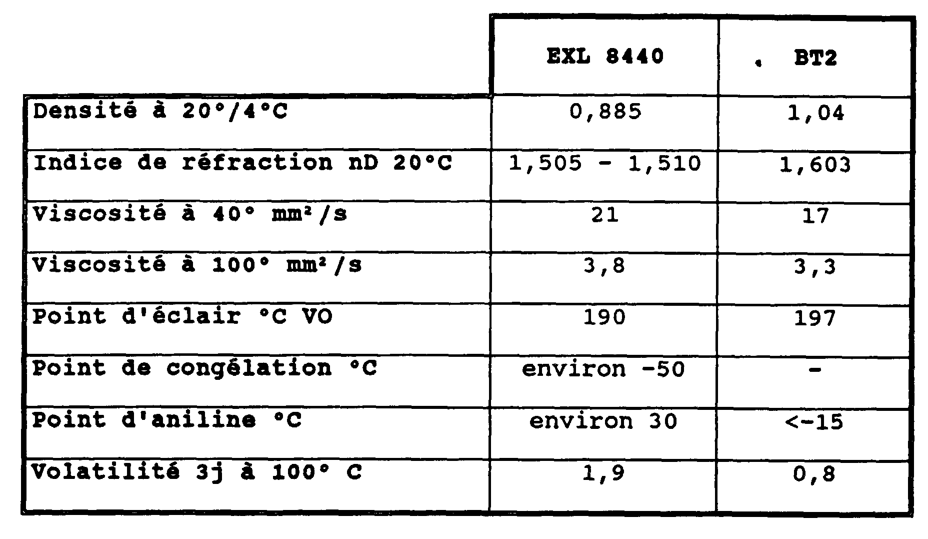

L'huile paraffinique est la EZL 675 de ESSO, ses caractéristiques sont :

| **CARACTERISTIQUES** | **METHODES** | **UNITES** | **EZL 675** |
|---|---|---|---|
| **Viscosité cinématique** | NF T 60-100 | | |
| **20°C** | | | |
| **40°C** | | mm²/s | 81.5 |
| **50°C** | | mm²/s | 32.5 |
| **50°C** | | mm²/s | 21.4 |
| **100°C** | | | 3.1 |
| **Indice de viscosité** | NF T 60-136 | | 108 |
| **Couleur SAYBOLT** | NF M 07-003 | cotation | +23 |
| **Masse volumique à 15°C** | NF T 60-101 | kg/m3 | 866 |
| **Point d'éclair V.O.** | NF T 60-118 | °C | 226 |
| **Point d'écoulement** | NF T 60-105 | °C | -6 |
| **Point d'aniline** | NF M 07-021 | °C | 106 |
| **Indice d'acide** | NF T 60-112 | mg KOH/g | 0.02 |
| **Soufre** | NF M 07-026 | % masse | 0.1 |
| **Indice de réfraction à 20°C** | NF T 60-212 | | |
| **Volatilité 3j 100°** | Perte de poids | % | 0,1 |
| **Type de Carbones** | ASTM D 2140 | | |
| **aromatiques** | | % | 3 |
| **paraffiniques** | | % | 66 |
| **naphténiques** | | % | 31 |

Le polynorbornène est un produit commercialisé par la société ELF ATOCHEM sous le nom de marque NORSOREX, décrit dans le brevet US 3676390.

Les mélanges de polynorbornène et d'huile sont préparés sur un mélangeur interne de marque RERIQUET R10 chauffé à 70° pendant une durée de 4,5 min. Leur propriétés après plastification sont données dans le tableau I.

### EXEMPLE 1 COMPARATIF

Le mélange de référence est bien compatible avec une viscosité relativement élevée - pas d'exsudation au stockage.

La perte de poids et l'augmentation de dureté après vieillissement sont relativement élevés.

### EXEMPLE 2 COMPARATIF

Ce mélange avec huile paraffinique est incompatible (exsudation, viscosité faible) - perte de poids faible car cette huile possède un point éclair très élevé.

### EXEMPLE 3

Mélange réalisé avec BT2.

En raison de son caractère hautement aromatique l'huile BT2 à un point d'aniline particulièrement bas.

L'huile BT2 se caractérise par une très bonne compatibilité avec le polynorbornène (pas d'exsudation, viscosité élevée). Cependant, l'augmentation de dureté après vieillissement est élevée car le BT2 est relativement volatile.

### EXEMPLE 4

Bonne compatibilité avec le polynorbornène. Le vieillissement à 100° C est bon (augmentation de dureté limitée).

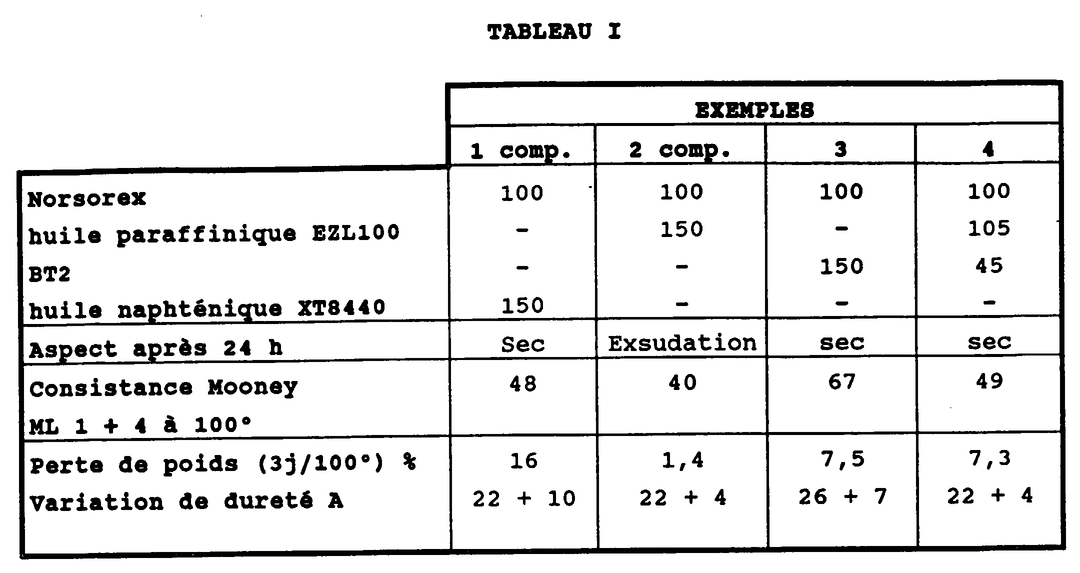

### EXEMPLE 5 a 11

On compare différents polyphénylméthanes selon l'invention avec une huile minérale aromatique dans une formule à base de caoutchouc SBR utilisé pour la fabrication des pneumatiques.

La formulation du SBR est la suivante :

| | |
|---|---|
| SBR 1502 | 100 |
| ZnO | 2 |
| Acide Stéarique | 1 |
| Noir de carbone (N220) | 80 |
| Cire antiozone | 2 |
| Antioxydant Permanax TQ | 1,4 |
| CBS | 1,5 |
| Soufre | 2 |
| Huile | 20 et 40 |

Les mélanges ont été réalisés sur un mélangeur interne Intermix.

Les différentes huiles sont :
- le BT3 (Tribenzyltoluène cité dans la description),
- le PBT (polybenzyltoluène cité dans la description),
- une huile aromatique Dutrex 729 largement utilisée pour plastifier le SBR notamment en raison des bonnes propriétés mécaniques des caoutchouc. Les principales caractéristiques physicochimiques de ces plastifiants sont les suivantes :

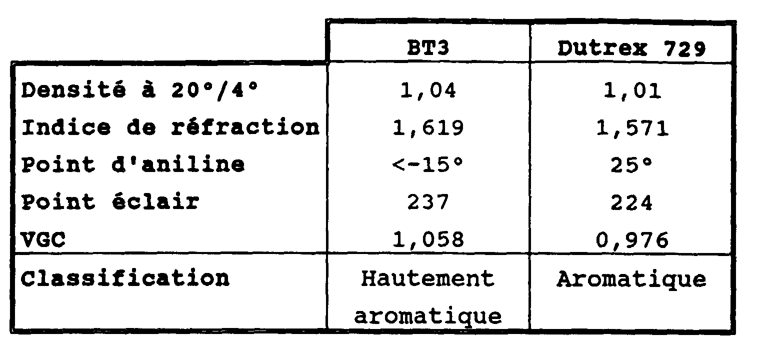

Malgré leur caractère hautement aromatique les polyphénylméthanes sont dépourvus de constituants polycycliques lourds.

Les différentes formulations d'élastomère étudiées ont été vulcanisées en moulage par compression de plaques à 170° pendant 12 minutes. Les tests mécaniques sont réalisés sur éprouvettes découpées dans ces plaques.

Les résultats sont reportés dans le TABLEAU II.

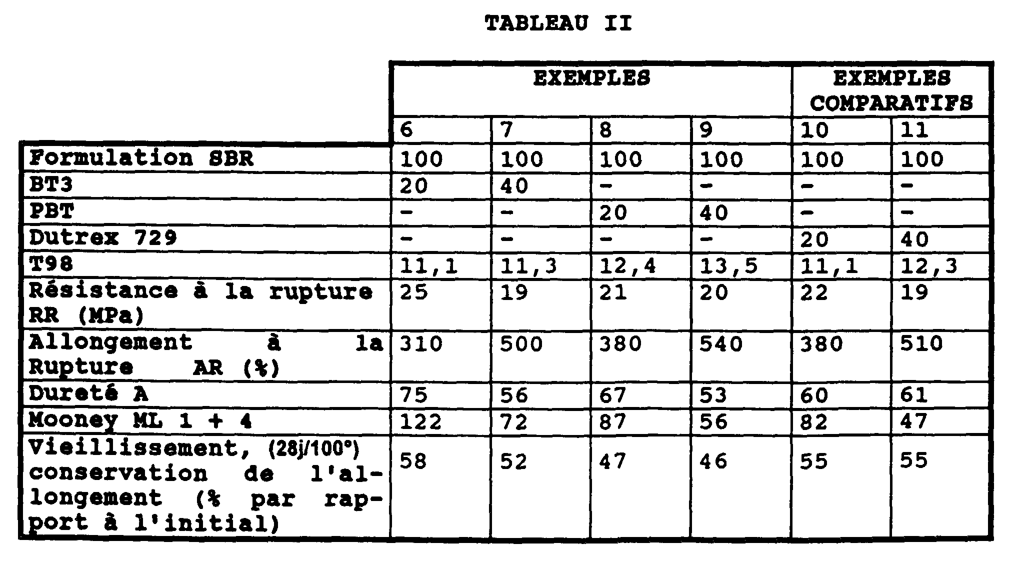

Les plastifiants PBT et BT3 égalent l'huile minérale aromatique de référence pour l'ensemble des propriétés spécifiques mesurées du tableau ainsi que pour la fragilité à froid (-48 dans tous les cas), et le test de torsion Gehman à froid.

## Revendications

1. Composition comprenant un élastomère insaturé et un plastifiant de la famille des polyphénylméthanes en quantité suffisante pour abaisser la température de transition vitreuse de l'élastomère pour en faire un caoutchouc, caractérisée en ce que les polyphénylméthanes sont choisis parmi les produits de la formule (1) : 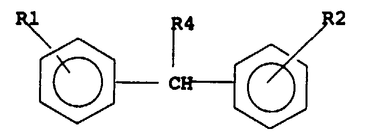 dans laquelle
R1, R2 et R4 représentent un ou plusieurs des radicaux suivants 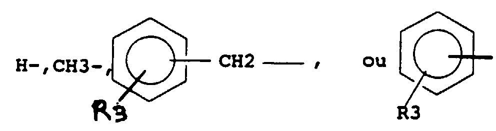
R3 désignant aussi un ou plusieurs des radicaux suivants

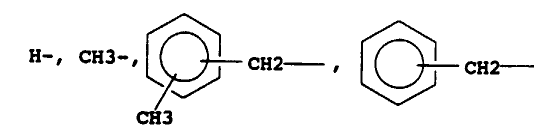

2. Composition selon la revendication 1 caractérisée en ce qu'elle comprend aussi une huile paraffinique.

3. Composition selon l'une des revendications 1 ou 2 caractérisée en ce que l'élastomère insaturé est du polynorbornène, du SBR ou du polybutadiène.

## Patentansprüche

1. Zusammensetzung, enthaltend ein ungesättigtes Elastomer und einen Weichmacher aus der Familie der Polyphenylmethane in einer zur Absenkung der Glasübergangstemperatur des Elastomers ausreichenden Menge, um daraus einen Kautschuk zu bilden, dadurch gekennzeichnet, daß die Polyphenylmethane ausgewählt sind aus Produkten der Formel (1) 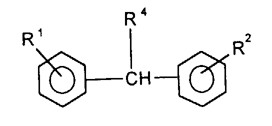 in der R¹, R² und R⁴ einen oder mehrere der folgenden Reste darstellen: 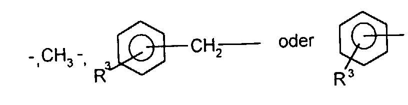 wobei R³ ebenfalls einen oder mehrere der folgenden Reste bezeichnet

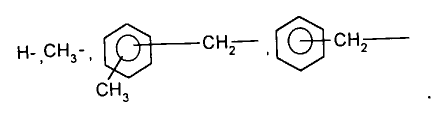

2. Zusammensetzung nach Anspruch 1, dadurch gekennzeichnet, daß sie auch ein paraffinisches Öl enthält.

3. Zusammensetzung nach einem der Ansprüche oder 2, dadurch gekennzeichnet, daß das ungesättigte Elastomer Polynorbornen, SBR (Styrol/Butadien-Gummi) oder Polybutadien ist.

## Claims

1. Composition comprising an unsaturated elastomer and a plasticizer of the polyphenylmethane class in a sufficient quantity to lower the glass transition temperature of the elastomer to make it a rubber, characterized in that the polyphenylmethanes are chosen from the products of formula (1): 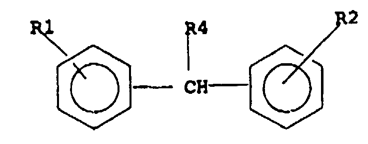 in which
R1, R2 and R4 denote one or more of the following radicals 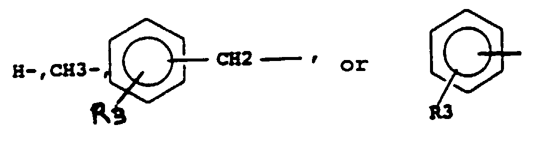
R3 also denoting one or more of the following radicals

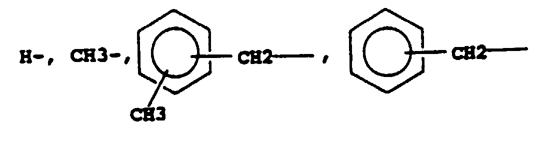

2. Composition according to Claim 1, characterized in that it also includes a paraffinic oil.

3. Composition according to one of Claims 1 and 2, characterized in that the unsaturated elastomer is polynorbornene, SBR or polybutadiene.
